# EUROPÄISCHE PATENTSCHRIFT

(11) **EP 0 412 146 B1**
(45) Veröffentlichungstag und Bekanntmachung des Hinweises auf die Patenterteilung: **04.05.1994**
(21) Anmeldenummer: 90903363.1
(22) Anmeldetag: 16.02.1990
(51) Int. Cl.: F28D 20/00, F28F 21/02

(54) **WÄRMESPEICHER MIT EXPANSIONSBEREICH**
THERMAL STORAGE UNIT WITH EXPANSION ZONE
ACCUMULATEUR DE CHALEUR AVEC UNE ZONE D'EXPANSION

(30) Priorität: 24.02.1989 DE 3905707
(43) Veröffentlichungstag der Anmeldung: 13.02.1991
(73) Patentinhaber: DEUTSCHE FORSCHUNGSANSTALT FÜR LUFT- UND RAUMFAHRT e.V., 53111 Bonn (DE)
(72) Erfinder: LINDNER, Friedrich, D-7022 Leinfelden-Echterdingen 1 (DE); STÄHLE, Hans-Jörg, D-7024 Filderstadt 1 (DE); TATTERMUSCH, Peter, D-7131 Altdorf (DE)
(74) Vertreter: Hoeger, Stellrecht & Partner
(86) Internationale Anmeldenummer: EP9000249
(87) Internationale Veröffentlichungsnummer: WO9010186

(56) Entgegenhaltungen:
- EP-A- 0 158 378
- WO-A-85/00212
- FR-A- 2 400 162
- GB-A- 2 142 135
- US-A- 4 241 782
- US-A- 4 696 338
- Patent Abstracts of Japan, volume 8, No. 166 (M-314) (1603), 2 August 1984; & JP,A, 5960185 (TOSHIBA K.K.) 6 April 1984

## Beschreibung

Die Erfindung betrifft einen Wärmespeicher mit einem Speicherbehälter, welcher einen Innenraum zur Aufnahme von Speichermedium aufweist, wobei der Innenraum einen Erstarrungsbereich, in welchem das Speichermedium nach einem Erstarrungsprozeß angeordnet ist, und einen Expansionsbereich umfaßt, in welchem sich das Speichermedium beim Schmelzvorgang ausdehnen kann.

Derartige Wärmespeicher sind bekannt (siehe z.B. EP-A-0 158 378), wobei als Behältermaterialien Reinstnickel, hochlegierte Stähle, Nickel-Kobalt oder Nickel-Kobalt- oder Niob-Legierungen Verwendung finden. Das Problem bei derartigen Speicherbehältern besteht darin, daß das Volumen des Speichermediums beim Übergang vom erstarrten zum vollstandig flüssigen Zustand in der Größenordnung von 20 bis 30 % zunimmt. Dies führt insbebesondere beim Laden eines derartigen Wärmespeichers zu mechanischen Problemen, da das an den Speicherbehäler unmittelbar angrenzende Speichermedium im Bereich von Wandflächen des Speicherbehälters zu schmelzen beginnt und sich hinsichtlich seines Volumens um den genannten Betrag ausdehnt, jedoch aufgrund des darüber sitzenden Kerns von noch erstarrtem Speichermedium keine Möglichkeit hat, in die sich beim Erstarren gebildeten Hohlräume auszuweiten. Aus diesem Grund werden derartige Speicherbehälter durch den Druckanstieg hohen mechanischen Belastungen beim Ladezyklus ausgesetzt. Darüberhinaus entstehen auch noch Probleme durch die Korrosion der Materialien, aus denen die Speicherbehälter hergestellt werden, so daß insgesamt nur Speicherbehälter mit sehr dick und stabil ausgeführten Wänden Verwendung finden können, was jedoch einen derartigen Wärmespeicher unattraktiv macht.

Der Erfindung liegt daher die Aufgabe zugrunde, einen Wärmespeicher der eingangs beschriebenen Art derart zu verbessern, daß geringere mechanische Belastungen auftreten und somit der Speicherbehälter konstruktiv einfacher und billiger ausgeführt werden kann.

Diese Aufgabe wird bei einem Speicherbehälter der eingangs beschriebenen Art erfindungsgemäß dadurch gelöst, daß an das Speichermedium angrenzende Wandflächen des Speicherbehälters aus einem vom Speichermedium nicht benetzbaren Material sind.

Der Vorteil der erfindungsgemäßen Lösung ist somit darin zu sehen, daß aufgrund der Wahl eines vom Speichermedium nicht benetzbaren Materials für die Wandflächen verhindert wird daß das erstarrte Speichermedium an den Wandflächen anhaftet, daß beim Beginn des Ladevorgangs, das heißt beim Beginn des Verflüssigens des Speichermediums die Möglichkeit geschaffen wird, die Volumenzunahme des sich verflüssigenden Speichermediums dadurch zu kompensieren, daß der Kern aus noch erstarrtem Speichermedium relativ zur Wand so verschoben wird, daß das verflüssigte Speichermedium in den Expansionsraum gelangen kann, so daß letztendlich keine oder nur geringe mechanische Kräfte auf den Speicherbehälter wirken. Damit kann der Speicherbehälter mechanisch wesentlich weniger stabil und einfacher und somit auch kostengünstiger ausgeführt werden.

Besonders vorteilhaft ist es dabei, wenn der Erstarrungsbereich sich zum Expansionsbereich hin erweitert, d.h. in Richtung zum Expansionsbereich hin einen zunehmend größeren Querschnitt aufweist. Dadurch wird zusätzlich zu der fehlenden Haftung des Speichermediums an den Wandflächen aufgrund des sich zu dem Expansionsbereich hin erweiternden Erstarrungsbereich bewirkt, daß sich beim Beginn des Ladevorgangs der Kern aus noch erstarrtem Speichermedium verschiebt und das verflüssigte Speichermedium in den Expansionsraum gelangt.

Es hat sich als besonders vorteilhaft erwiesen, wenn der Erstarrungsbereich sich zum Expansionsbereich hin konisch erweitert.

Um außerdem zu verhindern, daß sich der noch bestehende feste Kern aus erstarrtem Speichermaterial beim Verschieben verkantet und es somit zumindest kurzzeitig, bis weiteres erstarrtes Speichermedium verflüssigt ist, zu einer Druckerhöhung im Bereich des sich verflüssigenden Speichermediums kommen kann, ist es besonders vorteilhaft, wenn der sich an den Erstarrungsbereich anschließende Teil des Expansionsbereichs im wesentlichen mindestens denselben Querschnitt aufweist wie ein Übergang vom Erstarrungsbereich zum Expansionsbereich, so daß im sich an den Erstarrungsbereich anschließenden Teil des Expansionsbereich keine Querschnittverengung auftritt.

Die einfachste Realisierungsmöglichkeit eines derartigen Wärmespeichers sieht vor, daß der gesamte Innenraum eine sich zum Erstarrungsbereich hin konisch verengende Form aufweist.

Um bei dem vorliegenden Wärmespeicher zu gewährleisten, daß eine Erstarrung des Speichermediums stets im Erstarrungsbereich auftritt, ist vorteilhafterweise vorgesehen, daß ein Wärmetausch mit dem Speichermedium im wesentlichen über die Wandflächen des Erstarrungsbereichs erfolgt.

Ein derartiger Wärmeaustausch über die Wandflächen des Erstarrungsbereichs kann in vielfältiger Weise möglich sein. Beispielsweise können die Wandflächen des Erstarrungsbereichs als Ganzes auf ihrer dem Speichermedium entgegengesetzten Seite von einem Wärmeträgermedium umströmt sein. Die konstruktiv einfachste Lösung ist jedoch die, daß den Wandflächen des Erstarrungsbereichs Kanäle für ein Wärmeträgermedium zugeordnet sind.

Bei den bislang beschriebenen Ausführungsbeispielen wurde nichts darüber ausgesagt, wie weit der Innenraum mit Speichermedium gefüllt sein soll. Vorzugsweise ist dabei der Innenraum so weit mit vollständig flüssigem Speichermedium gefüllt, daß das erstarrte Speichermedium den Erstarrungsbereich vollständig ausfüllt.

Auch hinsichtlich der Bemessung des Expansionsbereichs wurden keine näheren Angaben gemacht. Besonders vorteilhaft ist es jedoch, daß das Volumen des Expansionsbereich mindestens ungefähr 30 % des Volumens des Erstarrungsbereichs beträgt, um sicherzustellen, daß der Expansionsbereich das vollständig flüssige Speichermedium vollständig aufnehmen kann.

Bei den bislang beschriebenen Ausführungsbeispielen wurde nicht näher darauf eingegangen, ob der Innenraum neben dem Expansionsbereich und dem Erstarrungsbereich noch weitere freie Volumenbereiche umfaßt. Eine optimale Ausnützung des Innenraums ist daher dann gegeben, wenn der Innenraum durch den Expansionsbereich und den Erstarrungsbereich gebildet ist. Ein vorstehend beschriebener Wärmespeicher kann hinsichtlich seiner Speicherkapazität dadurch noch zusätzlich optimiert werden, daß der Innenraum im wesentlichen mit vollständig flüssigem Speichermedium gefüllt ist, so daß der Expansionsbereich genau das Volumen umfaßt, um welches sich das erstarrte Speichermedium beim Übergang vom erstarrten zum flüssigen Zustand ausdehnt.

Bei den bislang beschriebenen Ausführungsbeispielen wurde nicht näher darauf eingegangen, aus welchem Material der Speicherbehälter hergestellt sein soll. So hat es sich hinsichtlich des vom Speichermedium nicht benetzbaren Materials für die Wandflächen als vorteilhaft erwiesen, wenn dieses Graphit ist, so daß also die Wandflächen Graphit umfassen. Besonders vorteilhaft ist es dabei, wenn die Wandflächen im wesentlichen aus Graphit sind. Um außerdem die Wärmeleitfähigkeit des Speicherbehälters, insbesondere der Wandbereiche des Speicherbehälters, zu verbessern, ist vorgesehen, daß in eine die Wandfläche tragende Wand des Speicherbehälters Metalle eingelagert sind.

Ferner kann die mechanische Festigkeit des Speicherbehälters noch dadurch gesteigert werden, daß in eine die Wandfläche tragende Wand des Speicherbehälters keramische Fasern eingelagert sind.

Da bereits die Wandflächen vorzugsweise aus Graphit ausgebildet sind, ist es außerdem vorteilhaft, wenn eine die Wandfläche tragende Wand des Speicherbehälters Graphit umfaßt.

Neben der Ausbildung der Wandflächen aus Graphit hat es sich auch als vorteilhaft erwiesen, wenn die Wandflächen Kohlenstoffasern umfassen, wobei ebenfalls die Kohlenstoffasern durch das Speichermedium nicht benetzbar sind. Hierbei ist es besonders zweckmäßig, wenn die Wandflächen im wesentlichen aus Kohlenstoffasern sind.

Um beim Verflüssigen des Speichermediums dem bereits flüssigen Speichermedium die Möglichkeit des Entweichens aus dem Erstarrungsbereich zu geben, ist vorteilhafterweise vorgesehen, daß die Wandflächen vom Erstarrungsbereich zum Expansionsbereich führende Verbindungskanäle aufweisen.

Vorteilhafterweise sind dabei die Verbindungskanäle so ausgebildet, daß bei den Verbindungskanälen einander zugewandte Wandflächen einen derartigen Abstand voneinander aufweisen, daß das Speichermedium aufgrund der Kapillarkräfte in diese in vollständig flüssigem Zustand im wesentlichen nicht eindringt.

Der Vorteil dieser Lösung ist darin zu sehen, daß durch die Ausbildung der Wandfläche aus einem vom Speichermedium nicht benetzbaren Material bereits jegliche Art von Korrosionsschäden unterbunden werden und daß außerdem durch die Verbindungskanäle zusätzliches Volumen geschaffen wurde, in welche das Speichermedium zwar in vollständig flüssigem Zustand im wesentlichen nicht eindringt und somit auch im erstarrten Zustand nicht eindringt, in welche es jedoch beim Schmelzprozeß dann, wenn der aufgeschmolzene Teil des Speichermediums aufgrund der Volumenzunahme unter erhöhtem Druck steht, entgegen der Wirkung der Kapillarkräfte eindringen und in den Expansionsbereich gelangen kann, so daß der Speicherbehälter keinen verstärkten Druckkräften ausgesetzt ist.

Vorzugsweise ist die Dimension der Verbindungskanäle so zu wählen, daß die Ausnehmungen in mindestens einer Richtung einen Abstand der Wandflächen aufweisen, welcher kleiner als ungefähr 6 mm ist. Derartige Abmessungen reichen insbesondere dann, wenn das Speichermedium keinen Gravitationskräften ausgesetzt ist, vollkommen aus. Noch vorteilhafter ist es, wenn der Abstand der Wandflächen kleiner als ungefähr 4 mm ist. Optimale Werte werden erzielt bei Abständen zwischen den Wandflächen von kleiner als ungefähr 2 mm, vorzugsweise kleiner als ungefähr 1 mm. Die letztgenannten Werte sind insbesondere beim Auftreten von auf das Speichermedium wirkenden Gravitationskräften von Bedeutung, da die Kapillarkräfte dann so groß sein müssen, daß sie auch diesen entgegenwirken.

Bei einem Ausführungsbeispiel, bei welchem die Wandflächen aus Kohlenstoffasern sind, ist es ebenfalls zweckmäßig, wenn die die Wandfläche tragende Wand des Speicherbehälters Kohlenstoffasern umfaßt, welche ebenfalls eine erhöhte mechanische Stabilität der Wand gewährleisten.

Um zu gewährleisten, daß der Wärmespeicher gegen seine Umgebung, insbesondere Luft, beständig und/oder gasdicht ist, ist vorgesehen, daß Außenflächen des Wärmespeichers mit einer oder mehreren Schutzschichten aus Metall und/oder Keramik überzogen sind. Unter Außenflächen sind dabei nicht dem Speichermedium zugewandte Oberflächen zu verstehen.

Insbesondere bei einem Speichermedium, welches mit dem Material der Wandflächen nicht chemisch reagiert, ist eine vorteilhafte Ausführungsform des erfindungsgemäßen Wärmespeichers geschaffen, da dieser eine hohe Langzeitstabilität aufweist.

Ein vorteilhaftes Speichermedium ist zum Beispiel Aluminium.

Bevorzugte Speichermedium sind auch Salze und Salzhydrate oder diese umfassende Eutektika.

Besondere Vorteile hinsichtlich der speicherbaren Energie bietet das erfindungsgemäße Konzept dann, wenn als Speichermedium Alkali- oder Erdalkalihalogenide oder diese umfassende Eutektika Verwendung finden, da diese sehr reaktiven Materialien besonders gut in einem Wärmespeicher mit durch das Speichermedium nicht benetzbaren Wandflächen gemäß der Erfindung eingesetzt werden können, ohne daß Korrosion an den Wandflächen entsteht.

Vorteile der Erfindung sind Gegenstand der nachfolgenden Beschreibung sowie der zeichnerischen Darstellung einiger Ausführungsbeispiele. In der Zeichnung zeigen:
- Fig. 1: eine perspektivische, teilweise geschnittene Darstellung eines ersten Ausführungsbeispiels;

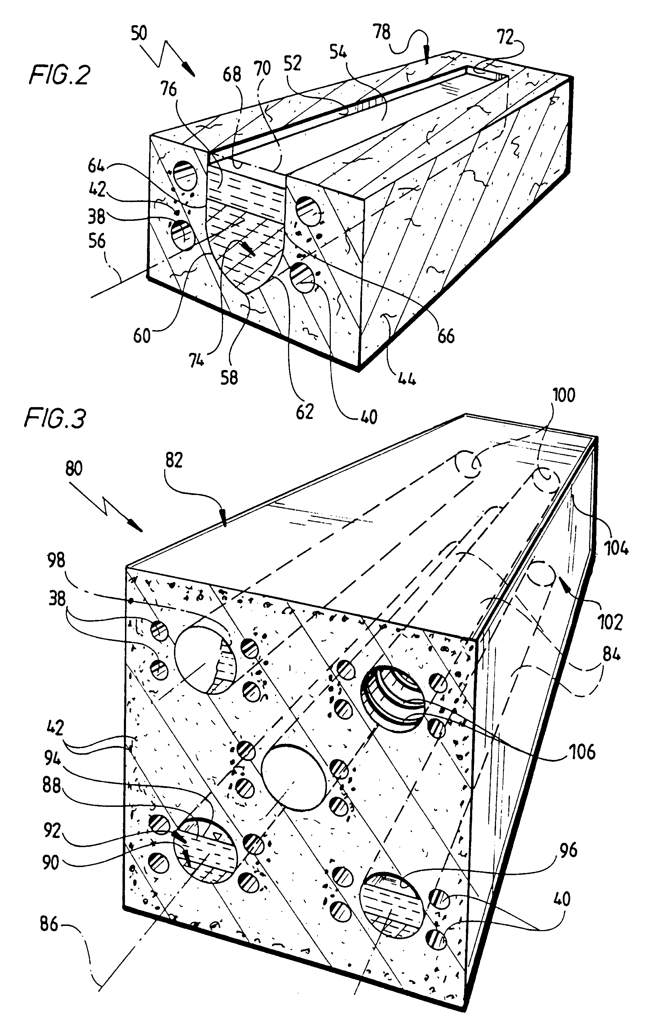

- Fig. 2: eine ausschnittsweise Darstellung eines zweiten Ausführungsbeispiels und
- Fig. 3: eine perspektivische ausschnittsweise Darstellung eines dritten Ausführungsbeispiels.

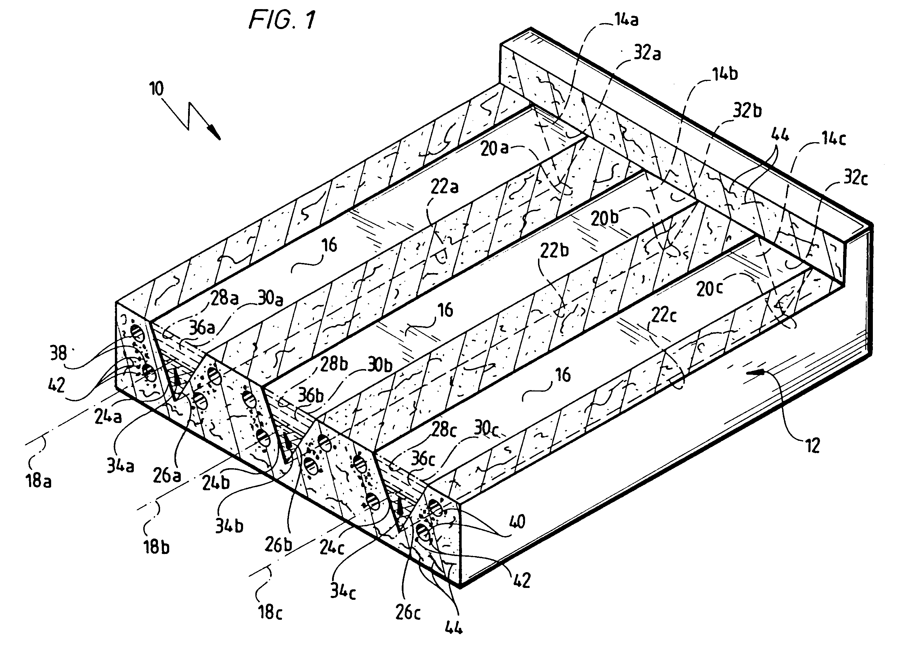

Fig. 1 zeigt ein als Ganzes mit 10 bezeichnetes erstes Ausführungsbeispiel eines erfindungsgemäßen Wärmespeichers mit einem Speicherbehälter 12, in welchem mehrere miteinander identische Innenräume 14a, b, c angeordnet sind, die zur Aufnahme eines Speichermediums 16 dienen, bei welchem es sich insbesondere um Alkali- oder Erdalkali-Halogenide oder deren Eutektika handelt.

Jeder dieser Innenräume 14a bis c ist ein langgestreckter zylindrischer Kanal mit einem dreieckförmigen Querschnitt, wobei eine Längsachse 18a, b, c eines jeden der zylindrischen Innenräume 14a, b, c im wesentlichen horizontal verläuft, so daß die dreieckige Querschnittsfläche senkrecht zur Längsachse 18a, b, c und somit in vertikaler Richtung verläuft. Ferner sind die Innenräume 14a, b, c so angeordnet, daß eine Spitze 20a, b, c des dreieckförmigen Querschnitts jeweils den tiefsten Punkt der Innenräume 14a, b, c bildet, so daß die dieser Spitze zugeordnete, zur Längsachse 18a, b, c parallele Unterkante 22a, b, c die tiefstliegenden Punkte der Innenräume 14a, b, c umfaßt.

Von diesen Unterkanten 22a, b, c erstrecken sich bei jedem der Innenräume 14a, b, c zwei einen spitzen Winkel miteinander einschließende Wandflächen 24a, b, c und 26a, b, c nach oben, welche durch eine obere Wandfläche 28a, b, c miteinander verbunden sind. Zusätzlich wird jeder Innenraum 14a, b, c noch durch vordere und hintere Stirnflächen 30a, b, c und 32a, b, c abgeschlossen.

Bei dem ersten Ausführungsbeispiel 10 ist der gesamte Innenraum 14a, b, c mit dem Speichermedium 16 gefüllt, welches im vollständig flüssigem Zustand somit auch das gesamte Volumen des Innenraums 14a, b, c einnimmt, wie durch die horizontalen Striche in Fig. 1 angedeutet werden soll.

Im erstarrten Zustand ist jedoch das Volumen des Speichermediums 16 um zirka 20 bis 30 % geringer, so daß sich das erstarrte,in Fig. 1 schraffiert dargestellte Speichermedium 16 in einem der Spitze 20a, b, c zugewandten Volumenbereich des Innenraums 14a, b, c absetzt und dabei ungefähr 80 bis 70 % des gesamten Volumens des Innenraums 14a, b, c einnimmt. Der Volumenbereich des Innenraums 14a, b, c, in welchem das Speichermedium 16 erstarrt, wird erfindungsgemäß als Erstarrungsbereich 34a, b, c bezeichnet, wobei dieser Erstarrungsbereich 34a, b, c durch Wandflächenteilbereiche 24a, b, c, 26a, b, c, 30a, b, c und 32a, b, c gebildet wird.

Der außer dem Erstarrungsbereich 34a, b, c noch verleibende restliche Volumenbereich des Innenraums 14a, b, c wird als Expansionsbereich 36a, b, c bezeichnet.

Bei dem ersten Ausführungsbeispiel 10 sind im Speicherbehälter 12 zusätzlich zu den Innenräumen 14a, b, c noch parallel zu den Längsachsen 18a, b, c der Innenräume 14a, b, c verlaufende Kanäle 38, 40 vorgesehen, welche vorzugsweise den Wandflächen 24a, b, c bzw. 26a, b, c zugeordnet sind, das heißt im Abstand von diesem und parallel zu der Längsachse 18a, b, c längs derselben verlaufen.

In diesen Kanälen 38, 40 strömt ein Wärmetauschermedium, mit welchem dem Speichermedium 16 wahlweise Wärme zuführbar ist oder Wärme entzogen werden kann.

Vorzugsweise sind die Kanäle 38 und 40 den zum Erstarrungsbereich 34a, b, c gehörenden Teilbereichen der Wandflächen 24a, b, c und 26a, b, c zugeordnet.

Der Speicherbehälter 12 des ersten Ausführungsbeispiels ist als Ganzes aus Graphit hergestellt, wobei die dem Speichermedium 16 zugewandten Wandflächen 24a, b, c, 26a, b, c 28a, b, c, 30a, b, c und 32a, b, c aus reinem Graphit sind, während in das übrige, die Wände des Speicherbehälters bildende Material vorzugsweise im Bereich der Kanäle 38, 40 und der Wandflächen 24a, b, c und 26a, b, c Metallteilchen 42 dem Graphit beigemischt sind, welche dazu dienen, die Wärmeleitung des Graphits zu erhöhen. Außerdem sind dem Graphitmaterial des gesamten Speicherbehälters noch Keramikfasern 44 zur Erhöhung der mechanischen Festigkeit beigemischt.

Das erste Ausführungsbeispiel des erfindungsgemäßen Speicherbehälters funktioniert nun so, daß, ausgehend von dem Speichermedium 16 in vollständig flüssigen Zustand, durch ein die Kanäle 38, 40 durchströmendes Wärmetauschermedium dem Speichermedium 16 Wärme entzogen wird, so daß dieses zu erstarren beginnt und aufgrund der Einwirkung der Schwerkraft und/oder des hauptsächlichen Wärmeentzugs in den zu dem Erstarrungsbereich 34a, b, c gehörenden Wandflächen 24a, b, c und 26a, b, c in dem Erstarrungsbereich 34a, b, c erstarrt und diesen ausfüllt.

Beim Wiedererwärmen dieses erstarrten Speichermediums 16 schmilzt nun zunächst der den Wandflächen 24a, b, c und 26a, b, c zugewandte Teil des Speichermediums im Erstarrungsbereich 34a, b, c, während mittig ein noch fester erstarrter Kern von Speichermedium verbleibt. Die dabei auftretende Volumenausdehnung in der Größenordnung von 20 bis 30 % wird nun dadurch abgefangen, daß aufgrund der Tatsache, daß das Speichermedium 16 die Wandflächen 24a, b, c und 26a, b, c, 30a, b, c und 32a, b, c nicht benetzt und die Wandflächen 24a, b, c und 26a, b, c einen spitzen Winkel miteinander einschließen, der verbleibende, noch erstarrte Teil des Speichermediums aus dem Erstarrungsbereich 34a, b, c nach oben in den Expansionsbereich 36a, b, c in dem Ausmaß geschoben werden kann, in welchem das Volumen des flüssig gewordenen Speichermediums im Bereich der Wandflächen 24a, b, c und 26a, b, c zunimmt. Dadurch ist die Gefahr beseitigt, daß auf den Speicherbehälter 12 beim Verflüssigen des Speichermediums 16 aufgrund der Volumenausdehnung große Kräfte wirken, die durch eine besondere mechanische Konstruktion abgefangen werden müssen, da der noch erstarrte Kern des Speichermediums stets die Möglichkeit hat, in den Expansionsbereich auszuweichen.

Bei einem zweiten, als Ganzes mit 50 bezeichneten Ausführungsbeispiel des erfindungsgemäßen Wärmespeichers ist lediglich ein Innenraum 52 dargestellt, welcher das Speichermedium 54 aufnimmt. Dieser Innenraum 52 erstreckt sich mit seiner Längsachse 56 ebenfalls in horizontaler Richtung. Der Innenraum 52 ist ebenfalls als Zylinder ausgebildet, allerdings mit einem Querschnitt, welcher ausgehend von einer einen tiefsten Punkt des Innenraums bildenden Spitze 58 mit parabolähnlich gebogenen Wandflächen 60 und 62 nach oben verläuft, welche ihrerseits in gerade und im wesentlichen vertikal verlaufende Wandflächen 64 und 66 übergehen, die dann ihrerseits durch eine im wesentlichen horizontal verlaufende Wandfläche 68 miteinander verbunden werden. Stirnseitig sind die Innenräume 52 dann noch durch vordere und hintere Wandflächen 70 und 72 miteinander verbunden.

Bei dem zweiten Ausführungsbeispiel wird ein Erstarrungsbereich 74 des Innenraums 52 durch die von der Spitze 58 nach oben verlaufenden parabolförmigen Wandflächen 60 und 62 sowie durch Teilbereiche der vorderen und hinteren Wandflächen 70 bzw. 72 begrenzt, das heißt, daß eine derartige Menge von Speichermedium 54 in dem Innenraum 52 vorhanden ist, daß dieses im erstarrten Zustand den Erstarrungsbereich 74 vollständig ausfüllt. Der über dem Erstarrungsbereich liegende Expansionsbereich 76 ist dabei größer bemessen als der zusätzliche Volumenbereich, welcher zu dem Erstarrungsbereich 74 bei vollständig flüssigem Speichermedium 54 erforderlich ist, so daß insgesamt der Innenraum 52 nicht vollständig gefüllt ist. Dieser Expansionsbereich 76 wird durch Teilbereiche der Wandflächen 64 und 66 sowie der vorderen und hinteren Wandflächen 70 und 72 begrenzt.

Das zweite Ausführungsbeispiel funktioniert im Prinzip genau wie das erste Ausführungsbeispiel mit dem Unterschied, daß jedoch der Expansionsbereich 76 nicht auch noch konisch ist. Da in diesem Bereich aber die Wandflächen 64 und 66 im wesentlichen vertikal, das heißt parallel zueinander verlaufen, besteht ebenfalls die Möglichkeit, daß der beim Aufschmelzen noch verbleibende Kern erstarrten Speichermediums nach oben in den Expansionsbereich 76 hinein verschoben werden kann, und somit durch die Volumenzunahme des Speichermediums 54 beim Übergang vom erstarrten zum flüssigen Zustand keine zusätzlichen Kräfte auf den als Ganzes mit 78 bezeichneten Speicherbehälter wirken.

Im übrigen ist der Speicherbehälter 78 aus denselben Materialien wie der Speicherbehälter 12 des ersten Ausführungsbeispiels 10 hergestellt, so daß auf die Ausführungen hierzu im Zusammenhang mit dem ersten Ausführungsbeispiel verwiesen wird.

Ein als Ganzes mit 80 bezeichnetes drittes Ausführungsbeispiel des erfindungsgemäßen Wärmespeichers umfaßt einen Speicherbehälter 82, in welchem Innenräume 84 mit einem kreiszylindrischen Querschnitt vorgesehen sind, wobei eine Längsachse 86 der Innenräume 84 ebenfalls horizontal verläuft. Die Innenräume 84 sind mit Speichermedium 88 jedoch nur so weit gefüllt, daß dieses im erstarrten Zustand ein Zylindersegment 90 ausfüllt, welches im wesentlichen weniger als die Hälfte des parallel zur Längsachse 86 geschnittenen Zylinderraums 84 mit kreisförmigem Querschnitt beträgt. Dieses Zylindersegment 90 bildet gleichzeitig den Erstarrungsbereich des Innenraums 84. Der über dem Erstarrungsbereich liegende Expansionsbereich entspricht ebenfalls nicht dem gesamten Innenraum 84, sondern einem weiteren Zylindersegment 92, so daß eine Flüssigkeitsoberfläche 94 des vollständig im flüssigen Zustand befindlichen Speichermediums 88 oberhalb der Längsachse 86 liegt und somit der Erstarrungsbereich 90 und der Expansionsbereich 92 etwas mehr als die Hälfte des gesamten Innenraums 84 einnehmen.

Dadurch wird erreicht, daß beim Schmelzen des erstarrten Speichermediums 88 der noch erstarrte Kern desselben aus dem Erstarrungsbereich 90 in den Expansionsbereich 92 geschoben werden kann, aufgrund der sich entgegen der Richtung der Schwerkraft nach oben erweiternden Wandflächen 96 des zylindrischen Innenraums 84.

Im Gegensatz zum ersten und zweiten Ausführungsbeispiel sind die Wandflächen 96 sowie vordere und hintere Wandflächen 98, 100 des Innenraums 84 aus reinen Kohlenstoffasern, während Wände des Speicherbehälters 82 auch noch vorzugsweise Metallteilchen zur Verbesserung der Wärmeleitfähigkeit umfassen können.

Im übrigen funktioniert das dritte Ausführungsbeispiel 80 genau wie das erste und das zweite Ausführungsbeispiel 10 und 50, so daß auf die Beschreibungen hierzu verwiesen werden kann.

Zum Schutz des Speicherbehälters 82 sind Außenflächen 102 desselben galvanisch mit einer Metallschicht 104 überzogen.

Besonders zweckmäßig ist es im Rahmen der erfindungsgemäßen Lösung, wenn - wie exemplarisch beim dritten Ausführungsbeispiel 80 dargestellt - in den Wandflächen 96 vom Erstarrungsbereich 90 zum Expansionsbereich 92 führend Verbindungskanäle 106 in Form von Nuten vorgesehen sind. Dabei sind Wände der Nuten vorzugsweise ebenfalls aus nicht vom Speichermedium benetzbaren Material und weisen einander zugewandte Wandflächen auf, die einen derartigen Abstand voneinander haben, daß das Speichermedium aufgrund der Kapillarkräfte in diese im vollständig flüssigen Zustand im wesentlichen nicht eindringt.

Um beispielsweise zu verhindern, daß die als Speichermedium dienenden Alkali- und Erdalkali-Halogenide oder deren Eutektika im vollständig flüssigen Zustand ohne zusätzlich auf diese wirkende Kraft in die Nuten 106 eindringen, haben die einander zugewandten Nutwandflächen einen Abstand voneinander, der kleiner als ungefähr 6 mm, bevorzugterweise 2 mm, ist. Ein derartiger Abstand der Nutwandflächen führt dazu, daß das Speichermedium aufgrund seiner Oberflächenspannung und der Tatsache, daß es die Wandfläche 96 nicht benetzt, in vollständig flüssigem oder vollständig erstarrtem Zustand im wesentlichen nicht in die Nuten eindringt. Ein Eindringen erfolgt nur dann, wenn beim Verflüssigen des Speichermediums noch erstarrtes Speichermedium ein Abfließen des bereits verflüssigten Speichermediums verhindert.

## Patentansprüche

1. Wärmespeicher mit einem Speicherbehälter (12, 78, 82), welcher einen Innenraum (14, 52, 84) zur Aufnahme von Speichermedium (16, 54, 88) aufweist, wobei der Innenraum (14, 52, 84) einen Erstarrungsbereich (34, 74, 90), in welchem das Speichermedium (16, 54, 88) nach einem Erstarrungsprozeß angeordnet ist, und einen Expansionsbereich (36, 76, 92) umfaßt, in welchem sich das Speichermedium (16, 54, 88) beim Schmelzvorgang ausdehnen kann,
**dadurch gekennzeichnet**, daß an das Speichermedium (16, 54, 88) angrenzende Wandflächen (24 bis 32; 60 bis 72; 96 bis 100) des Speicherbehälters (12, 78, 82) aus einem von Speichermedium (16, 54, 88) nicht benetzbaren Material sind.

2. Wärmespeicher nach Anspruch 1, dadurch gekennzeichnet, daß der Erstarrungsbereich (34, 74, 90) sich zu dem Expansionsbereich (36, 76, 92) hin erweitert.

3. Wärmespeicher nach Anspruch 2, dadurch gekennzeichnet, daß der Erstarrungsbereich (34, 74, 90) sich zu dem Expansionsbereich (36, 76, 92) hin konisch erweitert.

4. Wärmespeicher nach Anspruch 2 oder 3, dadurch gekennzeichnet, daß der sich an den Erstarrungsbereich (34, 74, 90) anschließende Teil des Expansionsbereichs (36, 76, 92) im wesentlichen mindestens denselben Querschnitt aufweist wie ein Übergang vom Erstarrungsbereich zum Expansionsbereich.

5. Wärmespeicher nach einem der Ansprüche 2 bis 4 durch gekennzeichnet, daß der gesamte Innenraum (14, 52, 84) eine sich zum Erstarrungsbereich (34, 74, 90) hin konisch verengende Form aufweist.

6. Wärmespeicher nach einem der voranstehenden Ansprüche, dadurch gekennzeichnet, daß ein Wärmetausch mit dem Speichermedium (16, 54, 88) im wesentlichen über die Wandflächen (24, 26, 30, 32; 60, 62, 70, 72; 96, 98, 100) des Erstarrungsbereichs (34, 74, 90) erfolgt.

7. Wärmespeicher nach Anspruch 6, dadurch gekennzeichnet, daß den Wandflächen (24, 26) des Erstarrungsbereichs (34) Kanäle (38, 40) für ein Wärmeträgermedium zugeordnet sind.

8. Wärmespeicher nach einem der voranstehenden Ansprüche, dadurch gekennzeichnet, daß der Innenraum (14, 52, 84) so weit mit vollständig flüssigem Speichermedium (16, 54, 88) gefüllt ist, daß das erstarrte Speichermedium (16, 54, 88) den Erstarrungsbereich (34, 74, 90) vollständig ausfüllt.

9. Wärmespeicher nach einem der voranstehenden Ansprüche, dadurch gekennzeichnet, daß das Volumen des Expansionsbereichs (36, 76, 92) mindestens ungefähr 30 % des Volumens des Erstarrungsbereichs (34, 74, 90) beträgt.

10. Wärmespeicher nach einem der voranstehenden Ansprüche, dadurch gekennzeichnet, daß der Innenraum (14, 52, 84) durch den Expansionsbereich (36, 76, 92) und den Erstarrungsbereich (34, 74, 90) gebildet ist.

11. Wärmespeicher nach Anspruch 10 dadurch gekennzeichnet, daß der Innenraum (14, 52, 84) im wesentlichen mit vollständig flüssigem Speichermedium (16, 54, 88) gefüllt ist.

12. Wärmespeicher nach einem der voranstehenden Ansprüche, dadurch gekennzeichnet, daß die Wandflächen (24 bis 32; 60 bis 72; 96 bis 100) Graphit umfassen.

13. Wärmespeicher nach Anspruch 12, dadurch gekennzeichnet, daß die Wandflächen (24 bis 32; 60 bis 72; 96 bis 100) aus Graphit sind.

14. Wärmespeicher nach einem der voranstehenden Ansprüche, dadurch gekennzeichnet, daß in eine die Wandfläche (24 bis 32; 60 bis 72; 96 bis 100) tragende Wand des Speicherbehälters (12, 78, 82) Metalle (42) eingelagert sind.

15. Wärmespeicher nach einem der voranstehenden Ansprüche, dadurch gekennzeichnet, daß in eine die Wandflächen (24 bis 32; 60 bis 72; 96 bis 100) tragende Wand des Speicherbehälters (12, 78, 82) keramische Fasern (44) eingelagert sind.

16. Wärmespeicher nach einem der voranstehenden Ansprüche, dadurch gekennzeichnet, daß eine die Wandfläche (24 bis 32; 60 bis 72; 96 bis 100) tragende Wand des Speicherbehälters (12, 78, 82) Graphit umfaßt.

17. Wärmespeicher nach einem der voranstehenden Ansprüche, dadurch gekennzeichnet, daß die Wandflächen (24 bis 32; 60 bis 72; 96 bis 100) Kohlenstoffasern umfassen.

18. Wärmespeicher nach Anspruch 17, dadurch gekennzeichnet, daß die Wandflächen (24 bis 32; 60 bis 72; 96 bis 100) aus Kohlenstoffasern sind.

19. Wärmespeicher nach einem der voranstehenden Ansprüche, dadurch gekennzeichnet, daß die Wandflächen (96) vom Erstarrungsbereich (90) zum Expansionsbereich (92) führende Verbindungskanäle (106) aufweisen.

20. Wärmespeicher nach einem der voranstehenden Ansprüche, dadurch gekennzeichnet, daß eine die Wandflächen (24 bis 32; 60 bis 72; 96 bis 100) tragende Wand des Speicherbehälters (12, 78, 82) Kohlenstoffasern umfaßt.

21. Wärmespeicher nach einem der voranstehenden Ansprüche, dadurch gekennzeichnet, daß Außenflächen (102) desselben mit einer oder mehreren Schutzschichten aus Metall und/oder Keramik (104) überzogen sind.

## Claims

1. Heat storage unit comprising a storage container (12, 78, 82) having an interior space (14, 52, 84) for receiving storage medium (16, 54, 88), wherein the interior space (14, 52, 84) comprises a solidification zone (34, 74, 90) and an expansion zone (36, 76, 92), the storage medium (16, 54, 88) being arranged in said solidification zone following a solidification process and the storage medium (16, 54, 88) being expandable in said expansion zone during the melting process, characterized in that wall surfaces (24 to 32; 60 to 72; 96 to 100) of the storage container (12, 78, 82) adjacent the storage medium (16, 54, 88) are made of a material not wettable by storage medium (16, 54, 88).

2. Heat storage unit as defined in claim 1, characterized in that the solidification zone (34, 74, 90) widens towards the expansion zone (36, 76, 92).

3. Heat storage unit as defined in claim 2, characterized in that the solidification zone (34, 74, 90) widens conically towards the expansion zone (36, 76, 92).

4. Heat storage unit as defined in claim 2 or 3, characterized in that the part of the expansion zone (36, 76, 92) adjoining the solidification zone (34, 74, 90) has essentially at least the same cross section as a transition from the solidification zone to the expansion zone.

5. Heat storage unit as defined in any of claims 2 to 4, characterized in that the entire interior space (14, 52, 84) has a shape tapering conically towards the solidification zone (34, 74, 90).

6. Heat storage unit as defined in any of the preceding claims, characterized in that a heat exchange takes place with the storage medium (16, 54, 88) essentially via the wall surfaces (24, 26, 30, 32; 60, 62, 70, 72; 96, 98, 100) of the solidification zone (34, 74, 90).

7. Heat storage unit as defined in claim 6, characterized in that channels (38, 40) for a heat carrier medium are associated with the wall surfaces (24, 26) of the solidification zone (34).

8. Heat storage unit as defined in any of the preceding claims, characterized in that the interior space (14, 52, 84) is filled with completely liquid storage medium (16, 54, 88) to such an extent that the solidified storage medium (16, 54, 88) fills the solidification zone (34, 74, 90) completely.

9. Heat storage unit as defined in any of the preceding claims, characterized in that the volume of the expansion zone (36, 76, 92) is at least approximately 30 % of the volume of the solidification zone (34, 74, 90).

10. Heat storage unit as defined in any of the preceding claims, characterized in that the interior space (14, 52, 84) is formed by the expansion zone (36, 76, 92) and the solidification zone (34, 74, 90).

11. Heat storage unit as defined in claim 10, characterized in that the interior space (14, 52, 84) is essentially filled with completely liquid storage medium (16, 54, 88).

12. Heat storage unit as defined in any of the preceding claims, characterized in that the wall surfaces (24 to 32; 60 to 72; 96 to 100) comprise graphite.

13. Heat storage unit as defined in claim 12, characterized in that the wall surfaces (24 to 32; 60 to 72; 96 to 100) are made of graphite.

14. Heat storage unit as defined in any of the preceding claims, characterized in that metals (42) are embedded in a wall of the storage container (12, 78, 82) bearing the wall surface (24 to 32; 60 to 72; 96 to 100).

15. Heat storage unit as defined in any of the preceding claims, characterized in that ceramic fibers (44) are embedded in a wall of the storage container (12, 78, 82) bearing the wall surfaces (24 to 32; 60 to 72; 96 to 100).

16. Heat storage unit as defined in any of the preceding claims, characterized in that a wall of the storage container (12, 78, 82) bearing the wall surface (24 to 32; 60 to 72; 96 to 100) comprises graphite.

17. Heat storage unit as defined in any of the preceding claims, characterized in that the wall surfaces (24 to 32; 60 to 72; 96 to 100) comprise carbon fibers.

18. Heat storage unit as defined in claim 17, characterized in that the wall surfaces (24 to 32; 60 to 72; 96 to 100) are made of carbon fibers.

19. Heat storage unit as defined in any of the preceding claims, characterized in that the wall surfaces (96) have connecting channels (106) leading from the solidification zone (90) to the expansion zone (92).

20. Heat storage unit as defined in any of the preceding claims, characterized in that a wall of the storage container (12, 78, 82) bearing the wall surfaces (24 to 32; 60 to 72; 96 to 100) comprises carbon fibers.

21. Heat storage unit as defined in any of the preceding claims, characterized in that outer surfaces (102) thereof are coated with one or more protective layers of metal and/or ceramics (104).

## Revendications

1. Accumulateur de chaleur présentant un réceptacle d'accumulation (12, 78, 82) qui comporte un espace interne (14, 52, 84) destiné à recevoir un agent d'accumulation (16, 54, 88), l'espace interne (14, 52, 84) comprenant une zone de solidification (34, 74, 90) dans laquelle l'agent d'accumulation (16, 54, 88) est disposé après un processus de solidification, et une zone d'expansion (36, 76, 92) dans laquelle l'agent d'accumulation (16, 54, 88) peut accuser une expansion lors du processus de fusion, caractérisé par le fait que des surfaces de paroi (24 à 32 ; 60 à 72 ; 96 à 100) du réceptacle d'accumulation (12, 78, 82), qui sont adjacentes à l'agent d'accumulation (16, 54, 88), consistent en un matériau non imprégnable par de l'agent d'accumulation (16, 54, 88).

2. Accumulateur de chaleur selon la revendication 1, caractérisé par le fait que la zone de solidification (34, 74, 90) s'évase en direction de la zone d'expansion (36, 76, 92).

3. Accumulateur de chaleur selon la revendication 2, caractérisé par le fait que la zone de solidification (34, 74, 90) s'évase tronconiquement en direction de la zone d'expansion (36, 76, 92).

4. Accumulateur de chaleur selon la revendication 2 ou 3, caractérisé par le fait que la partie de la zone d'expansion (36, 76, 92) qui est attenante à la zone de solidification (34, 74, 90) présente, pour l'essentiel, au moins la même section transversale qu'une transition de la zone de solidification vers la zone d'expansion.

5. Accumulateur de chaleur selon l'une des revendications 2 à 4, caractérisé par le fait que l'espace interne (14, 52, 84) présente, dans son ensemble, une forme se rétrécissant tronconiquement en direction de la zone de solidification (34, 74, 90).

6. Accumulateur de chaleur selon l'une des revendications précédentes, caractérisé par le fait qu'un échange thermique avec l'agent d'accumulation (16, 54, 88) s'opère, pour l'essentiel, par l'intermédiaire des surfaces de paroi (24, 26, 30, 32 ; 60, 62, 70, 72 ; 96, 98, 100) de la zone de solidification (34, 74, 90).

7. Accumulateur de chaleur selon la revendication 6, caractérisé par le fait que des canaux (38, 40) destinés à un agent caloporteur sont associés aux surfaces de paroi (24, 26) de la zone de solidification (34).

8. Accumulateur de chaleur selon l'une des revendications précédentes, caractérisé par le fait que l'espace interne (14, 52, 84) est empli d'un agent d'accumulation (16, 54, 88) intégralement fluide, jusqu'à une ampleur telle que l'agent d'accumulation solidifié (16, 54, 88) comble totalement la zone de solidification (34, 74, 90).

9. Accumulateur de chaleur selon l'une des revendications précédentes, caractérisé par le fait que le volume de la zone d'expansion (36, 76, 92) représente au moins approximativement 30 % du volume de la zone de solidification (34, 74, 90).

10. Accumulateur de chaleur selon l'une des revendications précédentes, caractérisé par le fait que l'espace interne (14, 52, 84) est formé par la zone d'expansion (36, 76, 92) et la zone de solidification (34, 74, 90).

11. Accumulateur de chaleur selon la revendication 10, caractérisé par le fait que l'espace interne (14, 52, 84) est empli, pour l'essentiel d'un agent d'accumulation (16, 54, 88) intégralement fluide.

12. Accumulateur de chaleur selon l'une des revendications précédentes, caractérisé par le fait que les surfaces de paroi (24 à 32 ; 60 à 72 ; 96 à 100) comprennent du graphite.

13. Accumulateur de chaleur selon la revendication 12, caractérisé par le fait que les surfaces de paroi (24 à 32 ; 60 à 72 ; 96 à 100) consistent en du graphite.

14. Accumulateur de chaleur selon l'une des revendications précédentes, caractérisé par le fait que des métaux (42) sont intégrés dans une paroi du réceptacle d'accumulation (12, 78, 82) portant la surface de paroi (24 à 32 ; 60 à 72 ; 96 à 100).

15. Accumulateur de chaleur selon l'une des revendications précédentes, caractérisé par le fait que des fibres céramiques (44) sont intégrées dans une paroi du réceptacle d'accumulation (12, 78, 82) portant les surfaces de paroi (24 à 32 ; 60 à 72 ; 96 à 100).

16. Accumulateur de chaleur selon l'une des revendications précédentes, caractérisé par le fait qu'une paroi du réceptacle d'accumulation (12, 78, 82), portant la surface de paroi (24 à 32 ; 60 à 72 ; 96 à 100), comprend du graphite.

17. Accumulateur de chaleur selon l'une des revendications précédentes, caractérisé par le fait que tes surfaces de paroi (24 à 32 ; 60 à 72 ; 96 à 100) comprennent des fibres de carbone.

18. Accumulateur de chaleur selon la revendication 17, caractérisé par le fait que les surfaces de paroi (24 à 32 ; 60 à 72 ; 96 à 100) consistent en des fibres de carbone.

19. Accumulateur de chaleur selon l'une des revendications précédentes caractérisé par le fait que tes surfaces de paroi (96) présentent des canaux de jonction (106) menant de la zone de solidification (90) à la zone d'expansion (92).

20. Accumulateur de chaleur selon l'une des revendications précédentes, caractérisé par le fait qu'une paroi du réceptacle d'accumulation (12, 78, 82), portant les surfaces de paroi (24 à 32 ; 60 à 72 ; 96 à 100), comprend des fibres de carbone.

21. Accumulateur de chaleur selon l'une des revendications précédentes, caractérisé par le fait que des surfaces extérieures (102) de ce dernier sont revêtues d'une ou plusieurs couche(s) protectrice(s) en un métal et/ou en de la céramique (104).
